# EUROPEAN PATENT APPLICATION

(11) **EP 4 773 523 A1**
(43) Date of publication of application: **08.07.2026**
(21) Application number: 24859157.0
(22) Date of filing: 03.07.2024
(51) Int. Cl.: H04B 10/80, H04J 14/00, H04J 14/08

(54) **UNDERWATER OPTICAL WIRELESS COMMUNICATION SYSTEM AND UNDERWATER OPTICAL WIRELESS COMMUNICATION METHOD**

(30) Priority: 28.08.2023 JP 2023138112
(71) Applicant: SHIMADZU CORPORATION, Kyoto-shi, Kyoto 604-8511 (JP)
(72) Inventor: EBARA, Yuki, Kyoto-shi, Kyoto 604-8511 (JP)
(74) Representative: Müller-Boré & Partner Patentanwälte PartG mbB
(86) International application number: PCT/JP2024/024078
(87) International publication number: WO 2025/047112

(57) **Abstract**

This underwater optical wireless communication system (100) includes a first optical wireless communication device (1) and a plurality of second optical wireless communication devices (2), wherein the first optical wireless communication device includes: a plurality of light emitting and receiving units (10) having a first light emitting unit (14) and a first light receiving unit (15); and a first control unit (11) that performs control to switch between a first communication scheme in which communication is performed simultaneously with the plurality of second optical wireless communication devices and a second communication scheme in which communication is performed sequentially with the plurality of second optical wireless communication devices, based on whether or not two or more second optical wireless communication devices are located within each region of a plurality of predetermined regions.

## Description

### [Technical Field]

The present invention relates to an underwater optical wireless communication system and an underwater optical wireless communication method, and particularly to an underwater optical wireless communication system and an underwater optical wireless communication method for performing communication between one underwater optical wireless communication device and a plurality of underwater optical wireless communication devices.

### [Background Art]

Conventionally, an underwater wireless communication system that performs communication between one underwater wireless communication device and a plurality of underwater wireless communication devices is known. Such an underwater wireless communication system is disclosed in, for example, Japanese Patent Laid-Open No. 2018-70125. Further, as an underwater wireless communication device, an underwater optical wireless communication system that performs wireless communication using light is known. Such an underwater optical wireless communication system is disclosed in, for example, Japanese Patent Laid-Open No. 2018-90017.

The above-mentioned Japanese Patent Laid-Open No. 2018-70125 discloses an underwater acoustic communication system including a single relay body and a plurality of underwater vehicles. The relay body disclosed in Japanese Patent Laid-Open No. 2018-70125 includes acoustic communication means having a transmitter for transmitting sound waves and a receiver for receiving sound waves. Further, each of the plurality of underwater vehicles disclosed in Japanese Patent Laid-Open No. 2018-70125 includes acoustic communication means having a transmitter for transmitting sound waves and a receiver for receiving sound waves. In the configuration disclosed in Japanese Patent Laid-Open No. 2018-70125, the single relay body is configured to perform acoustic communication using sound waves with each of the plurality of underwater vehicles.

Generally, it is known that communication using sound waves has a lower communication speed than communication using light or the like. Therefore, as disclosed in Japanese Patent Laid-Open No. 2018-70125, when communication using sound waves is performed underwater, there is a disadvantage that the communication speed becomes low. Therefore, in the communication system for underwater drones disclosed in Japanese Patent Laid-Open No. 2018-90017, a configuration is disclosed in which each of a plurality of underwater drones includes a transmitting and receiving antenna for transmitting and receiving wireless signals using light such as visible light, and performs wireless communication using light underwater.

### [Prior Art Documents]

### [Patent Documents]

Patent Document 1: Japanese Patent Laid-Open No. 2018-70125
Patent Document 2: Japanese Patent Laid-Open No. 2018-90017

### [Summary of Invention]

### [Problems to be Solved by the Invention]

Here, in order to improve communication speed in the configuration disclosed in Japanese Patent Laid-Open No. 2018-70125, when wireless communication using light is performed as disclosed in Japanese Patent Laid-Open No. 2018-90017, in order to efficiently perform communication between a relay body (first optical wireless communication device) and each of a plurality of underwater vehicles (second optical wireless communication devices), it is conceivable to perform communication simultaneously between the first optical wireless communication device and each of the plurality of second optical wireless communication devices. However, depending on the relative positions of the first optical wireless communication device and the plurality of second optical wireless communication devices, there is a problem that interference occurs when communication is performed simultaneously. Further, if communication is performed sequentially with each of the plurality of second optical wireless communication devices regardless of the relative positions of the first optical wireless communication device and the plurality of second optical wireless communication devices in order to avoid interference between the first optical wireless communication device and the plurality of second optical wireless communication devices, there is a problem that communication takes time and communication efficiency decreases.

The present invention has been made to solve the above problems, and one object of the present invention is to provide an underwater optical wireless communication system and an underwater optical wireless communication method capable of suppressing a decrease in communication efficiency while suppressing the occurrence of interference between a first optical wireless communication device 1 and a plurality of second optical wireless communication devices 2.

### [Means for Solving the Problems]

An underwater optical wireless communication system according to a first aspect of the present invention includes: a first optical wireless communication device configured to perform communication using light underwater; and a plurality of second optical wireless communication devices each configured to perform wireless communication using light underwater with the first optical wireless communication device, wherein the first optical wireless communication device includes: a plurality of light emitting and receiving units each having a first light emitting unit and a first light receiving unit, configured to irradiate light to a corresponding region among a plurality of predetermined regions and to receive light from the corresponding region among the plurality of predetermined regions; and a control unit configured to perform control to switch a scheme of communication using light by the plurality of light emitting and receiving units between a first communication scheme in which communication is performed simultaneously with the plurality of second optical wireless communication devices and a second communication scheme in which communication is performed sequentially with the plurality of second optical wireless communication devices, based on whether or not two or more second optical wireless communication devices among the plurality of second optical wireless communication devices are located within each region of the plurality of predetermined regions.

An underwater optical wireless communication method according to a second aspect of the present invention is an underwater optical wireless communication method for performing communication using light between a first optical wireless communication device and each of a plurality of second optical wireless communication devices underwater, the method comprising steps of: acquiring a number of the plurality of second optical wireless communication devices located within each region of a plurality of predetermined regions to which the first optical wireless communication device emits light; and switching a scheme of communication using light emitted from the first optical wireless communication device between a first communication scheme in which communication is performed simultaneously with the plurality of second optical wireless communication devices and a second communication scheme in which communication is performed sequentially with the plurality of second optical wireless communication devices, based on whether or not two or more second optical wireless communication devices among the plurality of second optical wireless communication devices are located in each of the plurality of predetermined regions.

### [Effects of the Invention]

**In** the underwater optical wireless communication system according to the first aspect and the underwater optical wireless communication method according to the second aspect of the present invention, based on whether or not two or more second optical wireless communication devices among the plurality of second optical wireless communication devices are located in each of the plurality of predetermined regions, the scheme of communication using light emitted from the first optical wireless communication device is switched between the first communication scheme in which communication is performed simultaneously with the plurality of second optical wireless communication devices and the second communication scheme in which communication is performed sequentially with the plurality of second optical wireless communication devices. Accordingly, when a plurality of second optical wireless communication devices are located within one predetermined region, communication between the first optical wireless communication device and the plurality of second optical wireless communication devices can be performed by the second communication scheme in which communication is performed sequentially with the plurality of second optical wireless communication devices, so that the occurrence of interference can be suppressed. Further, when one second optical wireless communication device is located within a predetermined region, communication between the first optical wireless communication device and the second optical wireless communication device can be performed by the first communication scheme in which communication is performed simultaneously, so that a decrease in efficiency of communication between the first optical wireless communication device and the second optical wireless communication device can be suppressed compared to a case where the second communication scheme by sequential communication is implemented in all cases. As a result, when the first optical wireless communication device communicates with a plurality of second optical wireless communication devices located within a plurality of predetermined regions, it is possible to use communication by the first communication scheme and communication by the second communication scheme in combination, so that communication can be performed efficiently while suppressing the occurrence of interference between the first optical wireless communication device and the plurality of second optical wireless communication devices.

### [Brief Description of Drawings]

[FIG. 1] FIG. 1 is a schematic diagram showing an overall configuration of an underwater optical wireless communication system according to one embodiment.
[FIG. 2] FIG. 2 is a block diagram showing a configuration of a first optical wireless communication device according to one embodiment.
[FIG. 3] FIG. 3 is a block diagram showing a configuration of a second optical wireless communication device according to one embodiment.
[FIG. 4] FIG. 4 is a block diagram for explaining a configuration in which the first optical wireless communication device determines the position of the second optical wireless communication device according to one embodiment.
[FIG. 5] FIG. 5 is a graph for explaining a configuration in which the first optical wireless communication device determines the position of the second optical wireless communication device according to one embodiment.
[FIG. 6] FIG. 6 is a schematic diagram for explaining a configuration in which the first optical wireless communication device communicates with each of a plurality of second optical wireless communication devices only by a first communication scheme according to one embodiment.
[FIG. 7] FIG. 7 is a schematic diagram for explaining a configuration in which the first optical wireless communication device uses the first communication scheme and a second communication scheme in combination when communicating with each of a plurality of second optical wireless communication devices according to one embodiment.
[FIG. 8] FIG. 8 is a schematic diagram for explaining a configuration in which the first optical wireless communication device communicates with each of a plurality of second optical wireless communication devices only by the second communication scheme according to one embodiment.
[FIG. 9] FIG. 9 is a graph for explaining a configuration in which the first optical wireless communication device switches communication schemes with each of a plurality of second optical wireless communication devices according to one embodiment.
[FIG. 10] FIG. 10 is a schematic diagram for explaining a configuration in which a first control unit controls a communication scheme when a second optical wireless communication device is located in a region where a first region and a second region overlap according to one embodiment.
[FIG. 11] FIG. 11 is a schematic diagram for explaining a configuration in which the first control unit controls a communication scheme when a second optical wireless communication device is located in a region where first regions overlap each other according to one embodiment.
[FIG. 12] FIG. 12 is a schematic diagram for explaining a configuration in which the first control unit controls a communication scheme when a second optical wireless communication device is located in a region where second regions overlap each other according to one embodiment.
[FIG. 13] FIG. 13 is a flowchart for explaining processing in which the first control unit switches a communication scheme according to one embodiment.
[FIG. 14] FIG. 14 is a flowchart for explaining processing in which the first control unit acquires the number of second optical wireless communication devices located within a predetermined region according to one embodiment.
[FIG. 15] FIG. 15 is a flowchart for explaining processing in which the first control unit switches a communication scheme for each predetermined region according to one embodiment.

### [Modes for Carrying Out the Invention]

Hereinafter, an embodiment embodying the present invention will be described based on the drawings.

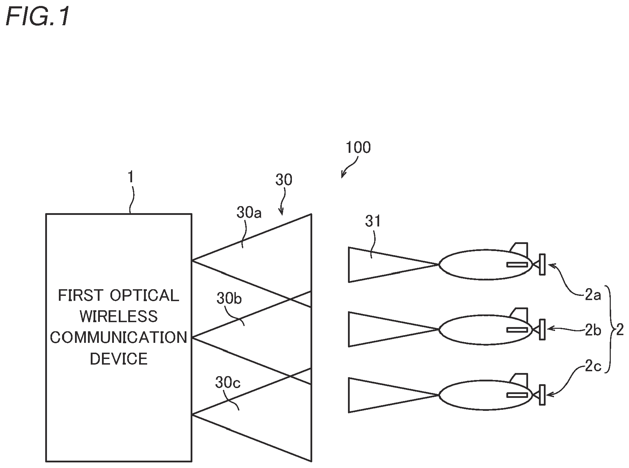

First, a configuration of an underwater optical wireless communication system 100 according to one embodiment and an underwater optical wireless communication method by the underwater optical wireless communication system 100 will be described with reference to FIGS. 1 to 12. The underwater optical wireless communication system 100 according to the present embodiment is used for inspection of structures installed underwater, such as offshore power generation facilities, aquaculture facilities, and seabed structures. The underwater optical wireless communication method according to the present embodiment is an underwater optical wireless communication method for performing communication using light between a first optical wireless communication device 1 and each of a plurality of second optical wireless communication devices 2 underwater when inspecting offshore power generation facilities, aquaculture facilities, seabed structures, and the like.

As shown in FIG. 1, the underwater optical wireless communication system 100 includes a first optical wireless communication device 1 and a plurality of second optical wireless communication devices 2. In the example shown in FIG. 1, the underwater optical wireless communication system 100 includes one first optical wireless communication device 1 and three second optical wireless communication devices 2. Specifically, the underwater optical wireless communication system 100 includes one first optical wireless communication device 1, a second optical wireless communication device 2a, a second optical wireless communication device 2b, and a second optical wireless communication device 2c. Note that the underwater optical wireless communication system 100 may include three or more second optical wireless communication devices 2. The underwater optical wireless communication system 100 is a system in which one first optical wireless communication device 1 and a plurality of second optical wireless communication devices 2 perform bidirectional communication. The underwater optical wireless communication system 100 may include, for example, 2 to 20 second optical wireless communication devices 2 for one first optical wireless communication device 1. Further, the underwater optical wireless communication system 100 may include a plurality of first optical wireless communication devices 1. When the underwater optical wireless communication system 100 includes a plurality of first optical wireless communication devices 1, each of the plurality of first optical wireless communication devices 1 performs bidirectional communication with each of a corresponding plurality of second optical wireless communication devices 2.

The first optical wireless communication device 1 is configured to perform communication using light underwater. Specifically, the first optical wireless communication device 1 is configured to perform communication using light underwater by emitting light to a plurality of predetermined regions 30 and receiving light from the plurality of predetermined regions 30.

Further, each of the plurality of second optical wireless communication devices 2 is configured to perform wireless communication using light underwater with the first optical wireless communication device 1. Specifically, each of the plurality of second optical wireless communication devices 2 is configured to perform communication using light underwater by emitting light to a predetermined region 31 and receiving light from the predetermined region 31.

The underwater optical wireless communication system 100 according to the present embodiment is configured such that the second optical wireless communication devices 2 receive light emitted from the first optical wireless communication device 1 to the plurality of predetermined regions 30, and the first optical wireless communication device 1 receives light emitted from the plurality of second optical wireless communication devices 2 to the predetermined region 31, thereby performing bidirectional communication using light. That is, each of the plurality of predetermined regions 30 is a region where communication with the first optical wireless communication device 1 is possible. Further, the predetermined region 31 is a region where the second optical wireless communication devices 2 can communicate.

A detailed configuration of the first optical wireless communication device 1 and a detailed configuration of the second optical wireless communication device 2 will be described later.

### (Configuration of First Optical Wireless Communication Device)

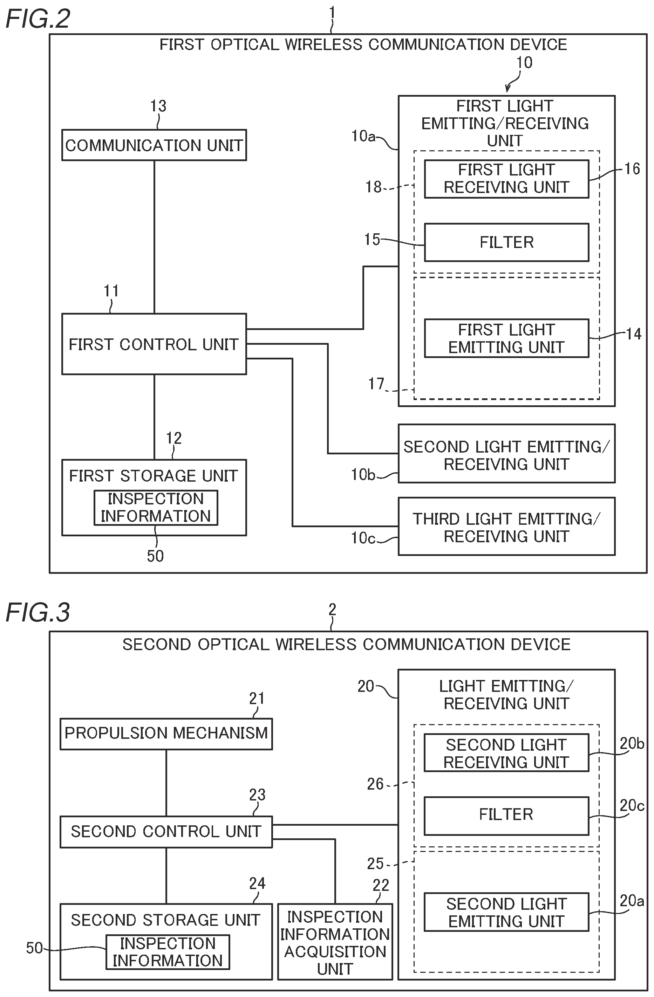

As shown in FIG. 2, the first optical wireless communication device 1 includes a plurality of light emitting and receiving units 10 and a first control unit 11. In the present embodiment, the first optical wireless communication device 1 further includes a first storage unit 12 and a communication unit 13. The first control unit 11 is an example of a "control unit" in the claims.

Each of the plurality of light emitting and receiving units 10 has a first light emitting unit 14 and a first light receiving unit 15. The plurality of light emitting and receiving units 10 are configured to irradiate light to a corresponding region among the plurality of predetermined regions 30 (see FIG. 1) and to receive light from the corresponding region among the plurality of predetermined regions 30. In the present embodiment, the first optical wireless communication device 1 has a first light emitting and receiving unit 10a, a second light emitting and receiving unit 10b, and a third light emitting and receiving unit 10c. Each of the first light emitting and receiving unit 10a, the second light emitting and receiving unit 10b, and the third light emitting and receiving unit 10c has a similar configuration to each other, only differing in arrangement in the first optical wireless communication device 1. Further, in the present embodiment, each of the plurality of light emitting and receiving units 10 includes a filter 16.

The first light emitting unit 14 is configured to emit light of a predetermined wavelength. In the present embodiment, the first light emitting unit 14 is configured to emit light of any one wavelength band among, for example, green, light blue, blue, and violet wavelength bands. The first light emitting unit 14 includes, for example, a laser diode.

The first light receiving unit 15 is configured to receive light irradiated to the light emitting and receiving unit 10. Further, the first light receiving unit 15 is configured to output a signal based on the received light to the first control unit 11. The first light receiving unit 15 includes, for example, a photomultiplier tube or the like.

The filter 16 is arranged upstream of the first light receiving unit 15 on a path of light incident on the light emitting and receiving unit 10. That is, light transmitted through the filter 16 is incident on the first light receiving unit 15. The filter 16 is configured to be capable of selectively transmitting light of a predetermined wavelength band. In the present embodiment, the filter 16 is configured to selectively transmit light in the wavelength band of the light emitted from the second optical wireless communication device 2 (see FIG. 1). The filter 16 includes, for example, a low-pass filter, a high-pass filter, a band-cut filter, and a filter combining these.

In the present embodiment, the first light emitting unit 14 is accommodated in a first housing 17. Further, the first light receiving unit 15 and the filter 16 are accommodated in a second housing 18. A window portion (not shown) is provided in the first housing 17. Further, the first housing 17 is made of a material that does not transmit light, such as a metal material, for example. Therefore, the first housing 17 is configured to be capable of irradiating the light emitted from the first light emitting unit 14 to the outside of the first optical wireless communication device 1 through the window portion.

A window portion (not shown) is provided in the second housing 18. Further, the second housing 18 is made of a material that does not transmit light, such as a metal material, for example. Therefore, the second housing 18 is configured such that the light emitted toward the light emitting and receiving unit 10 can enter through the window portion. The filter 16 is arranged at a position between the window portion and the first light receiving unit 15.

The first control unit 11 is configured to perform various controls of the first optical wireless communication device 1. Further, the first control unit 11 is configured to switch communication schemes between the first optical wireless communication device 1 and the second optical wireless communication devices 2. The first control unit 11 is configured by a processor such as a CPU (Central Processing Unit) or circuitry, and memories such as a ROM (Read Only Memory) and a RAM (Random Access Memory). Details of a configuration in which the first control unit 11 switches communication schemes between the first optical wireless communication device 1 and the second optical wireless communication devices 2 will be described later.

The first storage unit 12 is configured to store inspection information 50 described later. Further, the first storage unit 12 stores various programs executed by the first control unit 11. The first storage unit 12 includes, for example, a non-volatile storage device such as an HDD (Hard Disk Drive) or an SSD (Solid State Drive).

The communication unit 13 is configured to be capable of communicating with a communication device (not shown) provided on a mother ship (not shown) located on the sea surface or a communication device (not shown) provided on land. The communication unit 13 is connected by wire or wirelessly to the communication device provided on the mother ship located on the sea surface or the communication device provided on land, and is configured to be capable of communicating the inspection information 50.

In the present embodiment, as shown in FIG. 2, the first optical wireless communication device 1 includes three light emitting and receiving units 10. Therefore, the first optical wireless communication device 1 is configured to emit light to each of a predetermined region 30a (see FIG. 1), a predetermined region 30b (see FIG. 1), and a predetermined region 30c (see FIG. 1), and to receive light from each of the predetermined region 30a, the predetermined region 30b, and the predetermined region 30c.

### (Configuration of Second Optical Wireless Communication Device)

As shown in FIG. 3, each of the plurality of second optical wireless communication devices 2 includes a light emitting and receiving unit 20, a propulsion mechanism 21, and an inspection information acquisition unit 22. In the present embodiment, each of the plurality of second optical wireless communication devices 2 further includes a second control unit 23 and a second storage unit 24.

The light emitting and receiving unit 20 includes a second light emitting unit 20a and a second light receiving unit 20b. Further, the light emitting and receiving unit 20 includes a filter 20c.

The second light emitting unit 20a is configured to emit light to the predetermined region 31 (see FIG. 1). In the present embodiment, the second light emitting unit 20a is configured to emit light of any one wavelength band among, for example, green, light blue, blue, and violet wavelength bands, which is a wavelength band different from that of the light emitted by the first light emitting unit 14 (see FIG. 2). The second light emitting unit 20a includes, for example, a laser diode.

The second light receiving unit 20b is configured to receive light irradiated to the light emitting and receiving unit 20. Further, the second light receiving unit 20b is configured to output a signal based on the received light to the second control unit 23. The second light receiving unit 20b includes, for example, a photomultiplier tube or the like.

In the present embodiment, each of the plurality of second optical wireless communication devices 2 is configured to perform communication by emitting light from the second light emitting unit 20a to the predetermined region 31 (see FIG. 1) and by receiving light irradiated from the predetermined region 31 by the second light receiving unit 20b.

The filter 20c is arranged upstream of the second light receiving unit 20b on a path of light incident on the light emitting and receiving unit 20. That is, light transmitted through the filter 20c is incident on the second light receiving unit 20b. The filter 20c is configured to be capable of selectively transmitting light of a predetermined wavelength band. In the present embodiment, the filter 20c is configured to selectively transmit light in the wavelength band of the light emitted from the first light emitting unit 14 (see FIG. 2). The filter 20c includes, for example, a low-pass filter, a high-pass filter, a band-cut filter, and a filter combining these.

In the present embodiment, the second light emitting unit 20a is accommodated in a first housing 25. Further, the second light receiving unit 20b and the filter 20c are accommodated in a second housing 26. A window portion (not shown) is provided in the first housing 25. Further, the first housing 25 is made of a material that does not transmit light, such as a metal material, for example. Therefore, the first housing 25 is configured to be capable of irradiating the light emitted from the second light emitting unit 20a to the outside through the window portion.

A window portion (not shown) is provided in the second housing 26. Further, the second housing 26 is made of a material that does not transmit light, such as a metal material, for example. Therefore, the second housing 26 is configured such that the light emitted toward the light emitting and receiving unit 20 can enter through the window portion. The filter 20c is arranged at a position between the window portion and the second light receiving unit 20b.

The propulsion mechanism 21 is configured to apply a propulsion force to the second optical wireless communication device 2 under the control of the second control unit 23. The propulsion mechanism 21 includes a propeller (not shown) and a drive source (not shown) for driving the propeller. The propulsion mechanism 21 may be a so-called screw mechanism that obtains propulsion by rotating a propeller to push water, or may be a so-called water jet propulsion mechanism that obtains propulsion by ejecting a highpressure water stream rearward.

In the present embodiment, the second optical wireless communication device 2 is a mobile body capable of moving underwater by the propulsion mechanism 21. The mobile body includes, for example, an AUV (Autonomous Underwater Vehicle), a Remotely Operated Vehicle (ROV) piloted by a human via a cable, and the like.

The inspection information acquisition unit 22 is configured to acquire the inspection information 50 including at least an image of an inspection object. The inspection information acquisition unit 22 includes, for example, an optical camera. Further, the inspection information acquisition unit 22 may include sensors such as a magnetic sensor and a temperature sensor. When the inspection information acquisition unit 22 includes a magnetic sensor and a temperature sensor, the inspection information acquisition unit 22 may acquire magnetic information, temperature information, and the like as the inspection information 50 together with the image of the inspection object.

The second control unit 23 is configured to perform various controls of the second optical wireless communication device 2. The second control unit 23 is configured by a processor such as a CPU or circuitry, and memories such as a ROM and a RAM.

The second storage unit 24 stores various programs executed by the second control unit 23. Further, the second storage unit 24 is configured to store the inspection information 50 acquired by the inspection information acquisition unit 22. The second storage unit 24 includes, for example, a non-volatile storage device such as an HDD or an SSD.

In the present embodiment, each of the second optical wireless communication devices 2 is a remote station that transmits the inspection information 50 acquired by the inspection information acquisition unit 22 to the first optical wireless communication device 1 using light emitted from the second light emitting unit 20a while moving around the first optical wireless communication device 1 (see FIG. 2). Further, the first optical wireless communication device 1 is a base station that acquires the inspection information 50 from each of the plurality of second optical wireless communication devices 2. In the present embodiment, the first optical wireless communication device 1 is configured to transmit the acquired inspection information 50 to a communication device arranged on a mother ship or on land.

### (Determination of Position of Second Optical Wireless Communication Device)

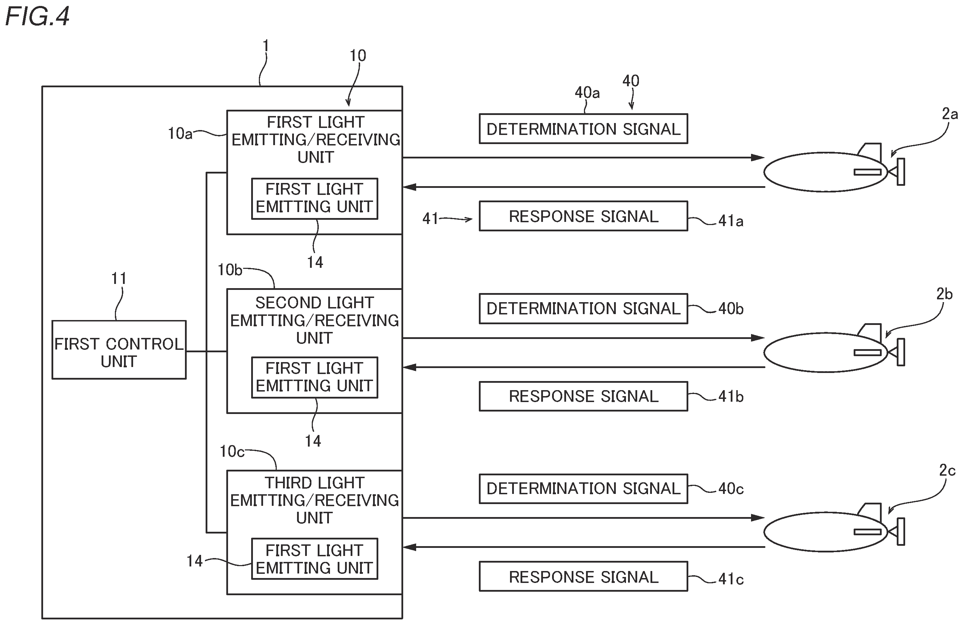

In the present embodiment, since each of the plurality of second optical wireless communication devices 2 is configured to be movable, the first control unit 11 (see FIG. 2) determines the position of each of the plurality of second optical wireless communication devices 2 when performing communication between the first optical wireless communication device 1 and the second optical wireless communication devices 2. Specifically, as shown in FIG. 4, the first control unit 11 is configured to emit determination signal light 40 used for determining the number of the plurality of second optical wireless communication devices 2 included in each of the plurality of predetermined regions 30 sequentially from the plurality of first light emitting units 14 to each of the plurality of second optical wireless communication devices 2.

Further, each of the plurality of second optical wireless communication devices 2 is configured to emit response signal light 41 for responding to the first optical wireless communication device 1 when the determination signal light 40 is received.

The determination signal light 40 emitted from the first optical wireless communication device 1 includes information identifying a light emission target. The information identifying the light emission target is, for example, an identification number uniquely set for each of the plurality of second optical wireless communication devices 2. Each of the plurality of second optical wireless communication devices 2 determines whether or not its own identification number is included in the received determination signal light 40. When its own identification number is included in the received determination signal light 40, the second optical wireless communication device 2 emits the response signal light 41. At that time, the second optical wireless communication device 2 includes its own identification number in the response signal light 41. Thereby, the first optical wireless communication device 1 can identify the second optical wireless communication device 2 that has emitted the response signal light 41 based on the identification number included in the received response signal light 41.

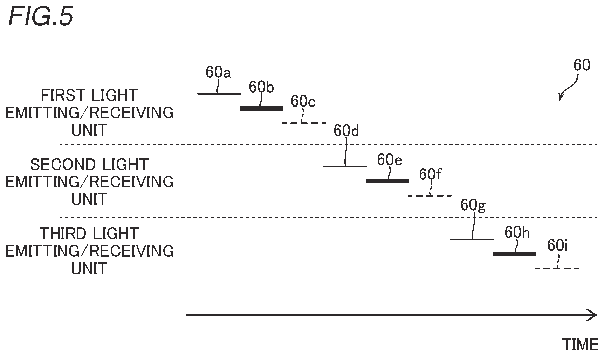

As shown in a graph 60 in FIG. 5, the first control unit 11 (see FIG. 4) is configured to perform control to cause the plurality of light emitting and receiving units 10 (see FIG. 4) to sequentially emit the determination signal light 40 (see FIG. 4). The graph 60 is a graph in which the horizontal axis represents time.

A solid line 60a in the graph 60 indicates a period during which the first optical wireless communication device 1 (see FIG. 4) performs communication with the second optical wireless communication device 2a (see FIG. 4). Specifically, the solid line 60a indicates a period during which the first light emitting and receiving unit 10a (see FIG. 4) waits to see whether or not response signal light 41a (see FIG. 4) from the second optical wireless communication device 2a is received after emitting determination signal light 40a (see FIG. 4) to the second optical wireless communication device 2a.

Further, a thick solid line 60b in the graph 60 indicates a period during which the first optical wireless communication device 1 performs communication with the second optical wireless communication device 2b (see FIG. 4). Specifically, the thick solid line 60b indicates a period during which the first light emitting and receiving unit 10a waits to see whether or not response signal light 41b (see FIG. 4) from the second optical wireless communication device 2b is received after emitting the determination signal light 40a to the second optical wireless communication device 2b.

Further, a broken line 60c in the graph 60 indicates a period during which the first optical wireless communication device 1 performs communication with the second optical wireless communication device 2c (see FIG. 4). Specifically, the broken line 60c indicates a period during which the first light emitting and receiving unit 10a waits to see whether or not response signal light 41c (see FIG. 4) from the second optical wireless communication device 2c is received after emitting the determination signal light 40a to the second optical wireless communication device 2c.

Further, each of a solid line 60d, a thick solid line 60e, and a broken line 60f in the graph 60 indicates a period during which the second light emitting and receiving unit 10b (see FIG. 4) waits to see whether or not response signal light 41a to response signal light 41c are received from the second optical wireless communication device 2a, the second optical wireless communication device 2b, and the second optical wireless communication device 2c after emitting determination signal light 40b (see FIG. 4) to each of the second optical wireless communication device 2a, the second optical wireless communication device 2b, and the second optical wireless communication device 2c.

Further, each of a solid line 60g, a thick solid line 60h, and a broken line 60i in the graph 60 indicates a period during which the third light emitting and receiving unit 10c (see FIG. 4) waits to see whether or not response signal light 41a to response signal light 41c are received from the second optical wireless communication device 2a, the second optical wireless communication device 2b, and the second optical wireless communication device 2c after emitting determination signal light 40c (see FIG. 4) to each of the second optical wireless communication device 2a, the second optical wireless communication device 2b, and the second optical wireless communication device 2c.

That is, the first control unit 11 is configured to sequentially control the first light emitting and receiving unit 10a, the second light emitting and receiving unit 10b, and the third light emitting and receiving unit 10c to emit the determination signal light 40 and to cause each light emitting and receiving unit 10 to receive the response signal light 41 emitted from each of the plurality of second optical wireless communication devices 2.

Referring again to FIG. 4. In the example shown in FIG. 4, the second optical wireless communication device 2a is located within the predetermined region 30a (see FIG. 1) and receives the determination signal light 40a emitted from the first light emitting and receiving unit 10a. Then, the second optical wireless communication device 2a that has received the determination signal light 40a emits the response signal light 41a from within the predetermined region 30a to the first light emitting and receiving unit 10a.

The first optical wireless communication device 1 determines that the second optical wireless communication device 2a is located within the predetermined region 30a by receiving the response signal light 41a at the first light emitting and receiving unit 10a.

Note that the second optical wireless communication device 2b and the second optical wireless communication device 2c are not located within the predetermined region 30a. Therefore, the second optical wireless communication device 2b and the second optical wireless communication device 2c do not receive the determination signal light 40a emitted from the first light emitting and receiving unit 10a. Therefore, the response signal light 41b and the response signal light 41c are not emitted from the second optical wireless communication device 2b and the second optical wireless communication device 2c to the first light emitting and receiving unit 10a. That is, the first control unit 11 can determine the presence or absence and the number of the second optical wireless communication devices 2 located in the predetermined region 30 in accordance with the response signal light 41 to the determination signal light 40 emitted from the first light emitting and receiving unit 10a.

Similarly to the first light emitting and receiving unit 10a, the second light emitting and receiving unit 10b also emits the determination signal light 40b to the predetermined region 30b (see FIG. 1), and determines the presence or absence and the number of the second optical wireless communication devices 2 located in the predetermined region 30b based on which response signal light 41 among the response signal light 41a to the response signal light 41c has been received. In the example shown in FIG. 4, since the second optical wireless communication device 2b is located within the predetermined region 30b, the determination signal light 40b emitted from the second light emitting and receiving unit 10b is received by the second optical wireless communication device 2b. Further, the second optical wireless communication device 2b that has received the determination signal light 40b emits the response signal light 41b to the second light emitting and receiving unit 10b. Thereby, the first control unit 11 determines that the second optical wireless communication device 2b is located within the predetermined region 30b.

Similarly to the first light emitting and receiving unit 10a and the second light emitting and receiving unit 10b, the third light emitting and receiving unit 10c also emits the determination signal light 40c to the predetermined region 30c (see FIG. 1), and determines the presence or absence and the number of the second optical wireless communication devices 2 located in the predetermined region 30c based on which response signal light 41 among the response signal light 41a to the response signal light 41c has been received. In the example shown in FIG. 4, since the second optical wireless communication device 2c is located within the predetermined region 30c, the determination signal light 40c emitted from the third light emitting and receiving unit 10c is received by the second optical wireless communication device 2c. Further, the second optical wireless communication device 2c that has received the determination signal light 40c emits the response signal light 41c to the third light emitting and receiving unit 10c. Thereby, the first control unit 11 determines that the second optical wireless communication device 2c is located within the predetermined region 30c.

In the present embodiment, each of the second optical wireless communication devices 2 includes the propulsion mechanism 21 (see FIG. 3) and is configured to be movable underwater. Also, either the first optical wireless communication device 1 or the second optical wireless communication devices 2 may be swept away by ocean currents or the like, and the relative positions of the first optical wireless communication device 1 and the plurality of second optical wireless communication devices 2 may change.

Therefore, the first control unit 11 is configured to control the plurality of first light emitting units 14 so as to sequentially emit the determination signal light 40 to each of the plurality of second optical wireless communication devices 2 at predetermined time intervals, and to control the plurality of first light receiving units 15 so as to receive the response signal light 41 from each of the plurality of second optical wireless communication devices 2 at predetermined time intervals. The predetermined time interval is, for example, 1 second.

Further, when the relative positions of the first optical wireless communication device 1 and the plurality of second optical wireless communication devices 2 change, interference may occur in communication between the first optical wireless communication device 1 and each of the plurality of second optical wireless communication devices 2. Therefore, in the present embodiment, the first control unit 11 is configured to switch communication schemes between the first optical wireless communication device 1 and each of the plurality of second optical wireless communication devices 2 based on the relative positions of the first optical wireless communication device 1 and the plurality of second optical wireless communication devices 2.

### (Communication Only by First Communication Scheme)

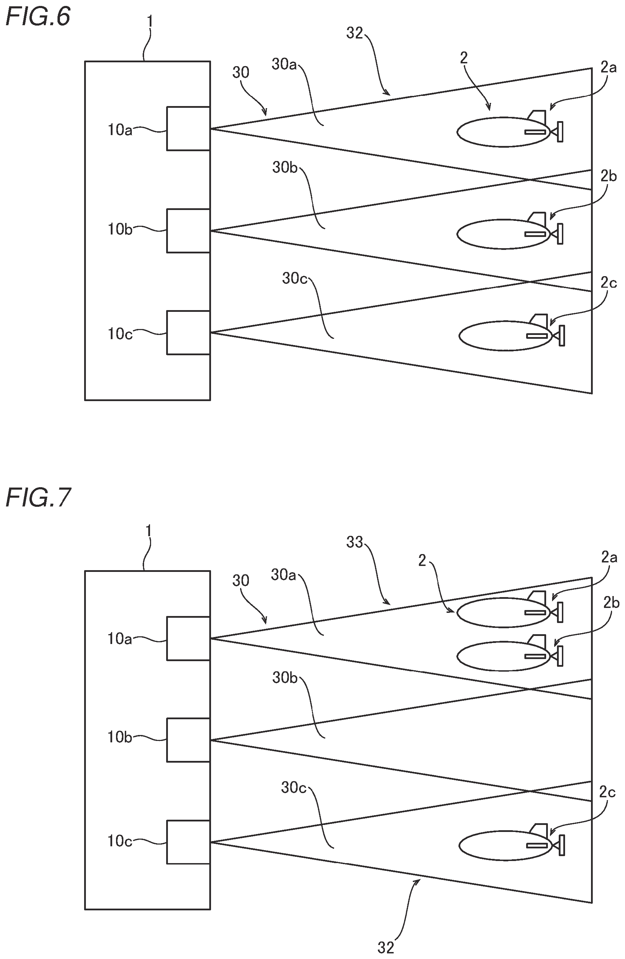

First, a configuration in which the first optical wireless communication device 1 and each of the plurality of second optical wireless communication devices 2 perform communication only by a first communication scheme will be described with reference to FIG. 6. The first communication scheme is a scheme in which the first optical wireless communication device 1 communicates with the plurality of second optical wireless communication devices 2 simultaneously.

The example shown in FIG. 6 shows a state in which each of the plurality of second optical wireless communication devices 2 is located in a mutually different region among the plurality of predetermined regions 30. Specifically, the second optical wireless communication device 2a is located in the predetermined region 30a, the second optical wireless communication device 2b is located in the predetermined region 30b, and the second optical wireless communication device 2c is located in the predetermined region 30c. In the present embodiment, among the plurality of predetermined regions 30, a region where any one second optical wireless communication device 2 among the plurality of second optical wireless communication devices 2 is located is defined as a first region 32. The predetermined region 30a, the predetermined region 30b, and the predetermined region 30c shown in FIG. 6 are all first regions 32.

As shown in FIG. 6, when each of the plurality of second optical wireless communication devices 2 is located in a mutually different region, the first optical wireless communication device 1 communicates with each of the second optical wireless communication device 2a to the second optical wireless communication device 2c simultaneously. That is, communication by the first light emitting and receiving unit 10a, communication by the second light emitting and receiving unit 10b, and communication by the third light emitting and receiving unit 10c are performed simultaneously.

### (Communication by Combination of First Communication Scheme and Second Communication Scheme)

Next, a configuration in which the first optical wireless communication device 1 and the plurality of second optical wireless communication devices 2 communicate using the first communication scheme and a second communication scheme in combination will be described with reference to FIG. 7. Note that the second communication scheme is a scheme in which the first optical wireless communication device 1 performs communication sequentially with each of the plurality of second optical wireless communication devices 2.

The example shown in FIG. 7 shows a state in which the second optical wireless communication device 2a and the second optical wireless communication device 2b are located in the predetermined region 30a, and the second optical wireless communication device 2c is located in the predetermined region 30c. Such a state may occur, for example, when the second optical wireless communication device 2b moves to the predetermined region 30a from the state shown in FIG. 6. Note that in the present embodiment, among the plurality of predetermined regions 30, a region where two or more second optical wireless communication devices 2 among the plurality of second optical wireless communication devices 2 are located is defined as a second region 33. In the example shown in FIG. 7, the predetermined region 30a is the second region 33. Further, in the example shown in FIG. 7, the predetermined region 30c is the first region 32.

As shown in FIG. 7, when two second optical wireless communication devices 2 are located within one predetermined region 30a, the first optical wireless communication device 1 cannot communicate simultaneously with the second optical wireless communication device 2a and the second optical wireless communication device 2b within the predetermined region 30a. On the other hand, either of the second optical wireless communication device 2a and the second optical wireless communication device 2b located in the predetermined region 30a, and the second optical wireless communication device 2c located in the predetermined region 30c can communicate simultaneously.

Therefore, in the present embodiment, the first control unit 11 (see FIG. 2) is configured to control the plurality of light emitting and receiving units 10 (see FIG. 2) so as to communicate with the second optical wireless communication device 2 by the first communication scheme when communicating with the second optical wireless communication device 2 within the first region 32. Further, the first control unit 11 is configured to control the plurality of light emitting and receiving units 10 so as to perform communication sequentially with each of the plurality of second optical wireless communication devices 2 by the second communication scheme when communicating with each of the second optical wireless communication devices 2 within the second region 33.

In the example shown in FIG. 7, the first control unit 11 controls the first light emitting and receiving unit 10a so that communication by the first light emitting and receiving unit 10a is performed by the second communication scheme, and controls the third light emitting and receiving unit 10c so that communication by the third light emitting and receiving unit 10c is performed by the first communication scheme.

In the present embodiment, when communicating with the second optical wireless communication device 2 located within the first region 32, the first control unit 11 is configured to control the plurality of light emitting and receiving units 10 so as to perform communication by a space division scheme in which communication is performed simultaneously with the second optical wireless communication devices 2 located in mutually different regions as the first communication scheme. Further, when communicating with each of the plurality of second optical wireless communication devices 2 located within the second region 33, the first control unit 11 is configured to control the plurality of light emitting and receiving units 10 so as to perform communication by a time division scheme in which communication is performed sequentially with each of the plurality of second optical wireless communication devices 2 located within one region as the second communication scheme.

### (Communication Only by Second Communication Scheme)

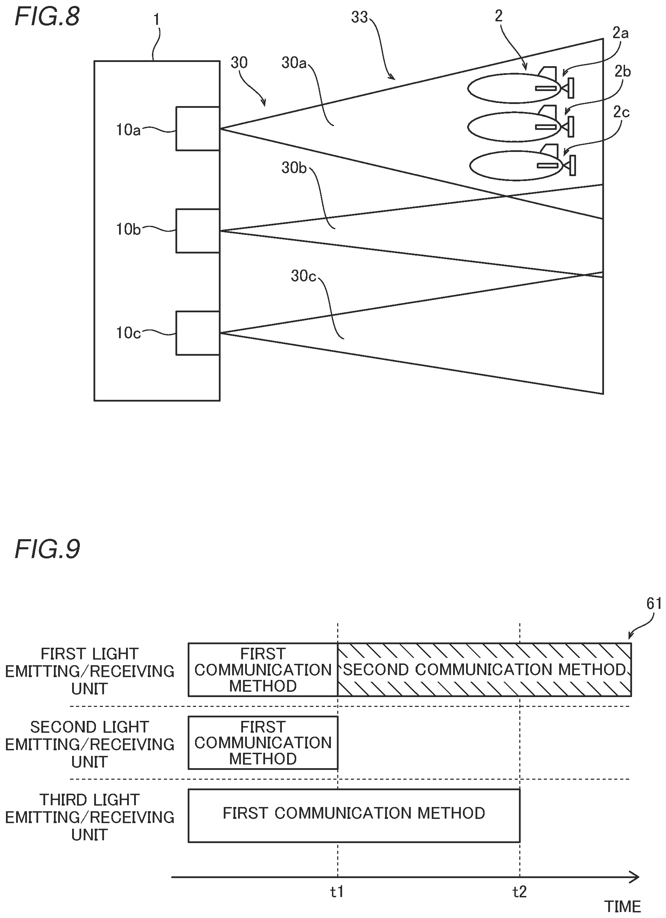

Next, a configuration in which the first optical wireless communication device 1 and each of the plurality of second optical wireless communication devices 2 perform communication only by the second communication scheme will be described with reference to FIG. 8.

The example shown in FIG. 8 shows a state in which the second optical wireless communication device 2a, the second optical wireless communication device 2b, and the second optical wireless communication device 2c are all located in the predetermined region 30a. Such a state occurs when each of the second optical wireless communication device 2b and the second optical wireless communication device 2c moves into the predetermined region 30a from the state shown in FIG. 6. Further, the state shown in FIG. 8 also occurs when the second optical wireless communication device 2c moves into the predetermined region 30a from the state shown in FIG. 7.

As shown in FIG. 8, when the plurality of second optical wireless communication devices 2 are located only within one predetermined region 30a (second region 33), the first control unit 11 (see FIG. 2) communicates with each of the second optical wireless communication device 2a, the second optical wireless communication device 2b, and the second optical wireless communication device 2c located within the predetermined region 30a only by the second communication scheme.

In the present embodiment, each of the plurality of second optical wireless communication devices 2 has the propulsion mechanism 21 (see FIG. 3). Therefore, each of the plurality of second optical wireless communication devices 2 can move freely. As each of the plurality of second optical wireless communication devices 2 moves, there may be a case where the plurality of second optical wireless communication devices 2 are located within one predetermined region 30 as shown in FIG. 8. In this case, if communication is performed by the first communication scheme with the second optical wireless communication devices 2 located within one predetermined region 30, interference occurs.

Depending on the positional relationship between the first optical wireless communication device 1 and the plurality of second optical wireless communication devices 2, there are cases where the first optical wireless communication device 1 can communicate with each of the plurality of second optical wireless communication devices 2 simultaneously as shown in FIG. 6, and cases where simultaneous communication is not possible as shown in FIG. 7 and FIG. 8. Therefore, in the present embodiment, the first control unit 11 is configured to perform control to switch the scheme of communication using light by the plurality of light emitting and receiving units 10 based on the positions of the plurality of second optical wireless communication devices 2 with respect to the plurality of predetermined regions 30. Specifically, the first control unit 11 is configured to perform control to switch the scheme of communication using light by the plurality of light emitting and receiving units 10 between the first communication scheme in which communication is performed simultaneously with the plurality of second optical wireless communication devices 2 and the second communication scheme in which communication is performed sequentially with the plurality of second optical wireless communication devices 2, based on whether or not two or more second optical wireless communication devices 2 among the plurality of second optical wireless communication devices 2 are located within each region of the plurality of predetermined regions 30.

A configuration in which the first control unit 11 (see FIG. 2) switches communication schemes will be described with reference to a graph 61 shown in FIG. 9. The graph 61 is a graph in which the horizontal axis represents time.

The graph 61 shown in FIG. 9 shows a configuration in which the first control unit 11 switches communication schemes when, for example, the positional relationship between the first optical wireless communication device 1 and each of the plurality of second optical wireless communication devices 2 changes from the state shown in FIG. 6 via the state shown in FIG. 7 to the state shown in FIG. 8 due to movement of the plurality of second optical wireless communication devices 2.

As shown in the graph 61, up to time t1, as shown in FIG. 6, the second optical wireless communication device 2a to the second optical wireless communication device 2c are located in the predetermined region 30a to the predetermined region 30c, respectively. Thereafter, at time t1, the second optical wireless communication device 2b moves to the predetermined region 30a, resulting in a state where the second optical wireless communication device 2a and the second optical wireless communication device 2b are located in the predetermined region 30a and the second optical wireless communication device 2c is located in the predetermined region 30c as shown in FIG. 7. Then, at time t2, the second optical wireless communication device 2c moves into the predetermined region 30a, resulting in a state where all of the second optical wireless communication device 2a to the second optical wireless communication device 2c are located in the predetermined region 30a as shown in FIG. 8.

Up to time t1, since each second optical wireless communication device 2 is located in a mutually different predetermined region 30, the first control unit 11 controls each of the first light emitting and receiving unit 10a (see FIG. 2), the second light emitting and receiving unit 10b (see FIG. 2), and the third light emitting and receiving unit 10c (see FIG. 2) to communicate by the first communication scheme.

Then, at time t1, since the second optical wireless communication device 2a and the second optical wireless communication device 2b come to be located in the predetermined region 30a, the first control unit 11 switches the communication scheme by the first light emitting and receiving unit 10a from the first communication scheme to the second communication scheme. Further, the first control unit 11 stops communication by the second light emitting and receiving unit 10b. Note that since the second optical wireless communication device 2c located in the predetermined region 30c does not move, the first control unit 11 does not change the communication scheme by the third light emitting and receiving unit 10c.

Thereafter, at time t2, since all of the second optical wireless communication device 2a, the second optical wireless communication device 2b, and the second optical wireless communication device 2c come to be located in the predetermined region 30a, the first control unit 11 stops communication by the third light emitting and receiving unit 10c. Further, the first control unit 11 switches the communication scheme by the first light emitting and receiving unit 10a to a scheme of communicating with the three second optical wireless communication devices 2 by the second communication scheme.

### (Configuration when Second Optical Wireless Communication Device is Located in Overlapping Region of Predetermined Regions)

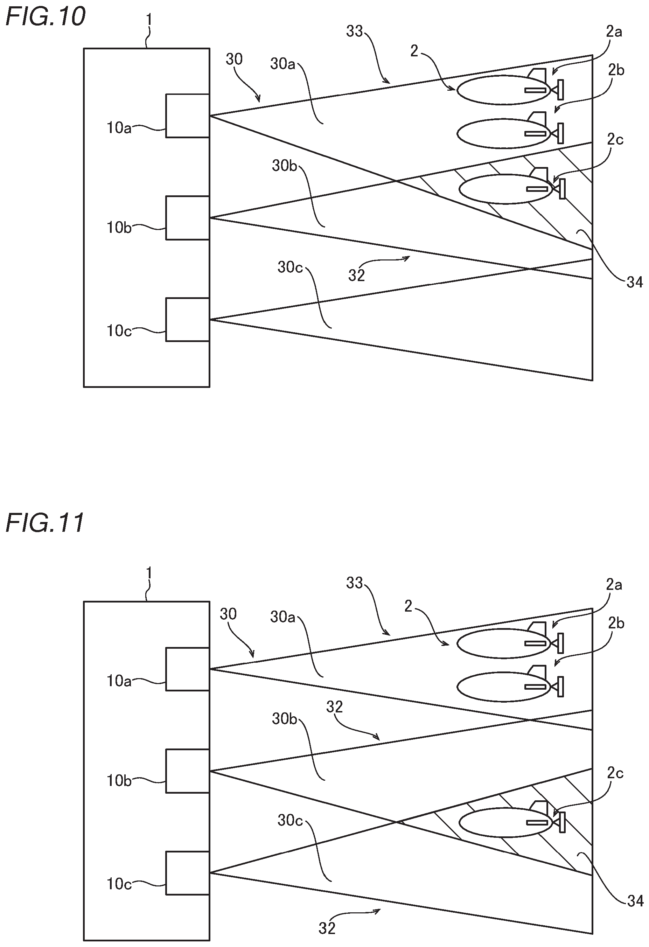

Here, as shown in FIG. 10, any of the plurality of second optical wireless communication devices 2 may move into an overlapping region 34 where a plurality of predetermined regions 30 overlap. The example shown in FIG. 10 shows a state where the second optical wireless communication device 2c has moved into the overlapping region 34 where the predetermined region 30a and the predetermined region 30b overlap.

In such a case, the second optical wireless communication device 2c becomes capable of emitting and receiving light to/from the first light emitting and receiving unit 10a and capable of emitting and receiving light to/from the second light emitting and receiving unit 10b. In the example shown in FIG. 10, three second optical wireless communication devices 2 are located in the predetermined region 30a, and one second optical wireless communication device 2 is located in the predetermined region 30b. That is, the overlapping region 34 shown in FIG. 10 is a region where the first region 32 and the second region 33 overlap. In this case, the first control unit 11 is configured to control the light emitting and receiving unit 10 so as to switch the communication scheme with the plurality of second optical wireless communication devices 2 to the second communication scheme.

For example, the first control unit 11 is configured to control the first light emitting and receiving unit 10a to sequentially communicate with each of the second optical wireless communication device 2a, the second optical wireless communication device 2b, and the second optical wireless communication device 2c. Further, the first control unit 11 may be configured such that communication with the second optical wireless communication device 2a and the second optical wireless communication device 2b is performed by the second communication scheme using the first light emitting and receiving unit 10a, and communication with the second optical wireless communication device 2c is performed by the second communication scheme using the second light emitting and receiving unit 10b.

Further, as shown in FIG. 11, when the second optical wireless communication device 2c moves into the overlapping region 34 where the predetermined region 30b which is the first region 32 and the predetermined region 30c which is the first region 32 overlap, the first control unit 11 controls to perform communication with the second optical wireless communication device 2c by switching either one of the second light emitting and receiving unit 10b and the third light emitting and receiving unit 10c to the first communication scheme.

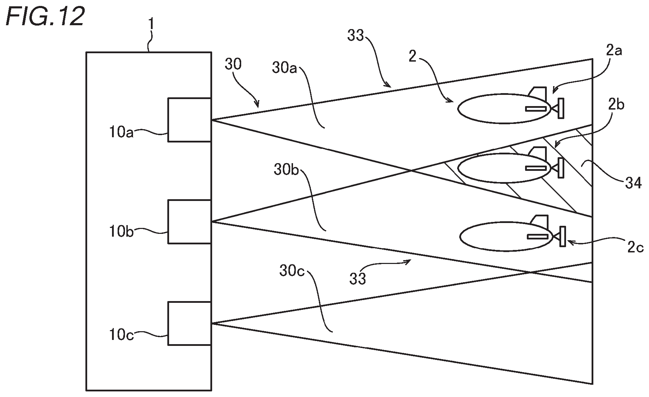

Further, as shown in FIG. 12, when the second optical wireless communication device 2b moves into the overlapping region 34 where the predetermined region 30a which is the second region 33 and the predetermined region 30b which is the second region 33 overlap, the first control unit 11 is configured to communicate with the second optical wireless communication device 2a and the second optical wireless communication device 2b by switching the communication scheme by the first light emitting and receiving unit 10a to the second communication scheme, and to communicate with the second optical wireless communication device 2c by switching the communication scheme by the second light emitting and receiving unit 10b to the second communication scheme. Note that the first control unit 11 may be configured to communicate with the second optical wireless communication device 2a by switching the communication scheme by the first light emitting and receiving unit 10a to the second communication scheme, and to communicate with the second optical wireless communication device 2b and the second optical wireless communication device 2c by switching the communication scheme by the second light emitting and receiving unit 10b to the second communication scheme.

When the second optical wireless communication device 2 is located in the overlapping region 34, which communication scheme of the light emitting and receiving unit 10 (see FIG. 2) is to be switched may be determined based on, for example, a preset priority. For example, when the priority is set such that the priority of the first light emitting and receiving unit 10a is the highest and the priorities become lower in the order of the second light emitting and receiving unit 10b and the third light emitting and receiving unit 10c, in the example shown in FIG. 10, the first control unit 11 controls to switch the first light emitting and receiving unit 10a to the second communication scheme and to stop communication of the second light emitting and receiving unit 10b and the third light emitting and receiving unit 10c. Further, in the example shown in FIG. 11, the first control unit 11 performs control to switch the communication scheme of the second light emitting and receiving unit 10b to the first communication scheme. Further, in the example shown in FIG. 12, the first control unit 11 communicates with the second optical wireless communication device 2a and the second optical wireless communication device 2b by switching to the second communication scheme using the communication scheme of the first light emitting and receiving unit 10a, and communicates with the second optical wireless communication device 2c by switching the communication scheme of the second light emitting and receiving unit 10b to the second communication scheme.

### (Communication Scheme Switching Process)

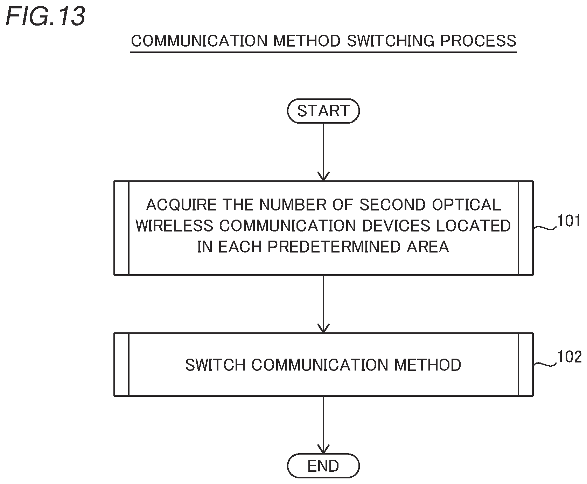

Next, processing in which the first control unit 11 (see FIG. 2) switches communication schemes will be described with reference to FIG. 13. The processing in which the first control unit 11 switches communication schemes is performed when any of the plurality of second optical wireless communication devices 2 (see FIG. 1) moves to a different predetermined region 30 (see FIG. 1).

In step 101, the first control unit 11 acquires the number of the plurality of second optical wireless communication devices 2 located within each region of the plurality of predetermined regions 30 (see FIG. 1) to which the first optical wireless communication device 1 (see FIG. 1) emits light. Details of the processing in which the first control unit 11 acquires the number of the plurality of second optical wireless communication devices 2 located within each region of the plurality of predetermined regions 30 will be described later.

In step 102, the first control unit 11 switches the scheme of communication using light emitted from the first optical wireless communication device 1 between the first communication scheme in which communication is performed simultaneously with the plurality of second optical wireless communication devices 2 and the second communication scheme in which communication is performed sequentially with the plurality of second optical wireless communication devices 2, based on whether or not two or more second optical wireless communication devices 2 among the plurality of second optical wireless communication devices 2 are located in each of the plurality of predetermined regions 30. Thereafter, the processing ends. Details of the processing in which the first control unit 11 switches the communication scheme between the first communication scheme and the second communication scheme will be described later.

### (Acquisition Process of Number of Second Optical Wireless Communication Devices in Predetermined Region)

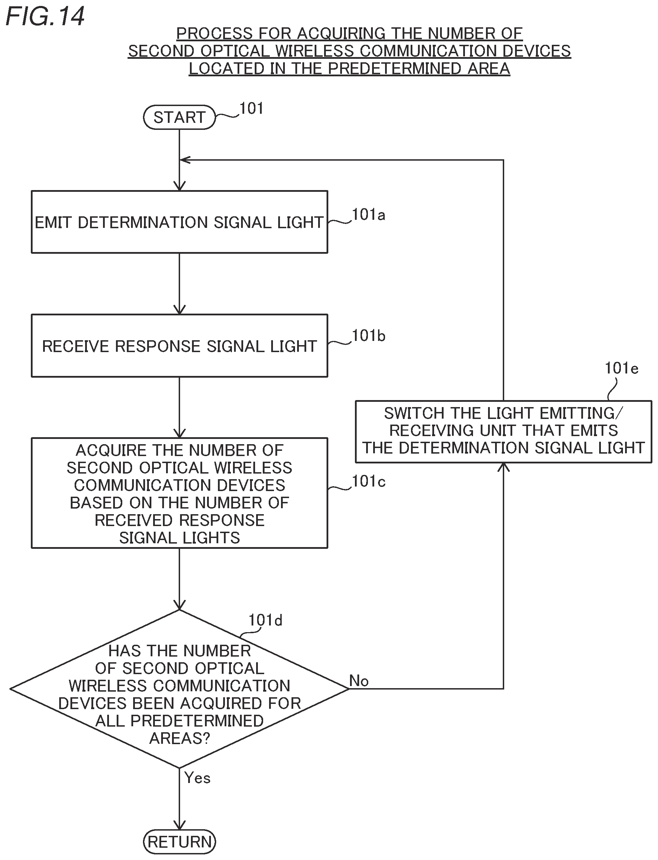

Next, processing in which the first control unit 11 (see FIG. 2) acquires the number of the plurality of second optical wireless communication devices 2 (see FIG. 1) located within each region of the plurality of predetermined regions 30 (see FIG. 1) will be described with reference to FIG. 14.

In step 101a, the first control unit 11 emits the determination signal light 40 (see FIG. 4). Specifically, the first control unit 11 controls the plurality of light emitting and receiving units 10 (see FIG. 2) to emit the determination signal light 40. In the present embodiment, the first control unit 11 controls the light emitting and receiving unit 10 to emit the determination signal light 40 at predetermined time intervals to all of the plurality of second optical wireless communication devices 2 included in the underwater optical wireless communication system 100 (see FIG. 1). Specifically, by controlling the light emitting and receiving unit 10, the first control unit 11 emits determination signal light 40a (see FIG. 4), determination signal light 40b (see FIG. 4), and determination signal light 40c (see FIG. 4) to the second optical wireless communication device 2a (see FIG. 4), the second optical wireless communication device 2b (see FIG. 4), and the second optical wireless communication device 2c (see FIG. 4), respectively.

In step 101b, the first control unit 11 receives the response signal light 41 (see FIG. 4). Specifically, the first control unit 11 receives response signal light 41a (see FIG. 4), response signal light 41b (see FIG. 4), and response signal light 41c (see FIG. 4) from the second optical wireless communication device 2a, the second optical wireless communication device 2b, and the second optical wireless communication device 2c, respectively, at predetermined time intervals. Note that each of the plurality of second optical wireless communication devices 2 emits the response signal light 41 when receiving the determination signal light 40 emitted toward itself. Therefore, when the corresponding second optical wireless communication device 2 is not located within the predetermined region 30 where the determination signal light 40 was emitted, the response signal light 41 is not emitted to the light emitting and receiving unit 10.

In step 101c, the first control unit 11 acquires the number of second optical wireless communication devices 2 located within the predetermined region 30 based on the received response signal light 41.

In step 101d, the first control unit 11 determines whether or not the number of second optical wireless communication devices 2 has been acquired in all the predetermined regions 30. If the number of second optical wireless communication devices 2 has been acquired in all the predetermined regions 30, the processing proceeds to step 102. If the number of second optical wireless communication devices 2 has not been acquired in all the predetermined regions 30, the processing proceeds to step 101e.

In step 101e, the first control unit 11 switches the light emitting and receiving unit 10 that emits the determination signal light 40. That is, the first control unit 11 switches the predetermined region 30 for which the number of second optical wireless communication devices 2 is acquired. Thereafter, the processing proceeds to step 101a.

### (Communication Scheme Switching Process for Each Predetermined Region)

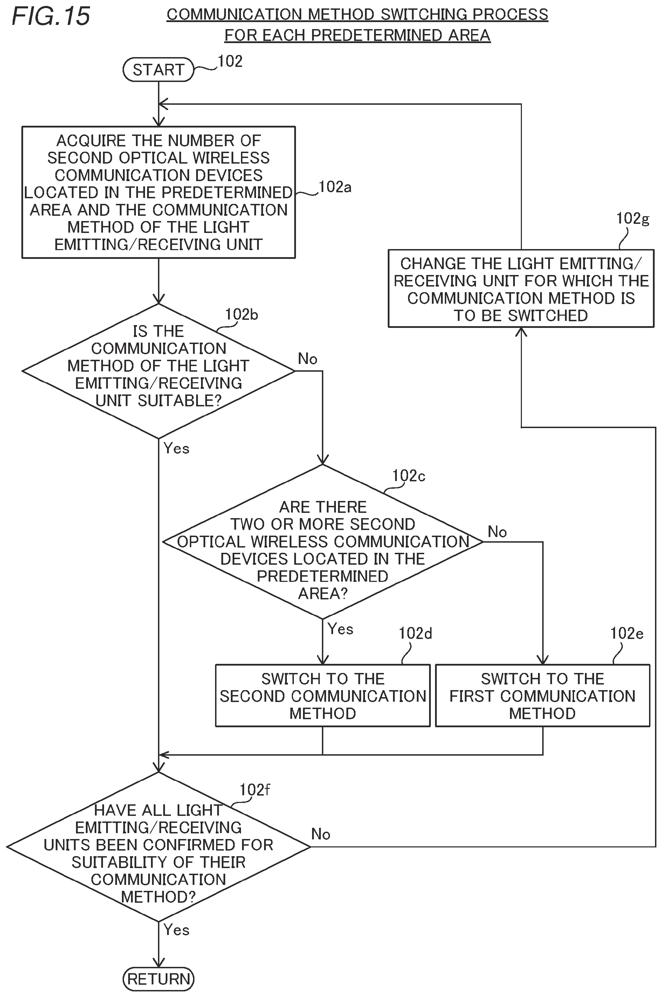

Next, processing in which the first control unit 11 (see FIG. 2) switches the communication scheme for each predetermined region 30 (see FIG. 1) will be described with reference to FIG. 15.

In step 102a, the first control unit 11 acquires the number of second optical wireless communication devices 2 (see FIG. 3) located within the predetermined region 30, and the communication scheme of the light emitting and receiving unit 10 (see FIG. 2).

In step 102b, the first control unit 11 determines whether or not the communication scheme by the light emitting and receiving unit 10 is appropriate. Specifically, when the number of second optical wireless communication devices 2 located in the predetermined region is one, the first control unit 11 determines whether or not the communication scheme of the light emitting and receiving unit 10 is the first communication scheme. Further, when the number of second optical wireless communication devices 2 located within the predetermined region 30 is two or more, the first control unit 11 determines whether or not the communication scheme of the light emitting and receiving unit 10 is the second communication scheme. If the communication scheme by the light emitting and receiving unit 10 is appropriate, the processing proceeds to step 102f. If the communication scheme by the light emitting and receiving unit 10 is not appropriate, the processing proceeds to step 102c.

In step 102c, the first control unit 11 determines whether or not the number of second optical wireless communication devices 2 located within the predetermined region 30 is two or more. If the number of second optical wireless communication devices 2 located within the predetermined region 30 is two or more, the processing proceeds to step 102d. Also, if the number of second optical wireless communication devices 2 located within the predetermined region 30 is one, the processing proceeds to step 102e.

In step 102d, the first control unit 11 switches the communication scheme by the light emitting and receiving unit 10 to the second communication scheme. Thereafter, the processing proceeds to step 102f.

Further, when the processing proceeds from step 102c to step 102e, in step 102e, the first control unit 11 switches the communication scheme by the light emitting and receiving unit 10 to the first communication scheme. Thereafter, the processing proceeds to step 102f.

In step 102f, the first control unit 11 determines whether or not it has been confirmed that the communication schemes of all the light emitting and receiving units 10 are appropriate. If it has not been confirmed whether the communication schemes of all the light emitting and receiving units 10 are appropriate, the processing proceeds to step 102g. If it has been confirmed that the communication schemes of all the light emitting and receiving units 10 are appropriate, the processing ends.

When the processing proceeds from step 102f to step 102g, in step 102g, the first control unit 11 switches the light emitting and receiving unit 10 for which the communication scheme is to be confirmed. Thereafter, the processing proceeds to step 102a.

### (Effects of the Present Embodiment)

In the present embodiment, the following effects can be obtained.

In the present embodiment, as described above, the underwater optical wireless communication system 100 includes the first optical wireless communication device 1 configured to perform communication using light underwater, and the plurality of second optical wireless communication devices 2 each configured to perform wireless communication using light underwater with the first optical wireless communication device 1. The first optical wireless communication device 1 includes: the plurality of light emitting and receiving units 10 each having the first light emitting unit 14 and the first light receiving unit 15, configured to irradiate light to a corresponding region among the plurality of predetermined regions 30 and to receive light from the corresponding region among the plurality of predetermined regions 30; and the first control unit 11 configured to perform control to switch the scheme of communication using light by the plurality of light emitting and receiving units 10 between the first communication scheme in which communication is performed simultaneously with the plurality of second optical wireless communication devices 2 and the second communication scheme in which communication is performed sequentially with the plurality of second optical wireless communication devices 2, based on whether or not two or more second optical wireless communication devices 2 among the plurality of second optical wireless communication devices 2 are located within each region of the plurality of predetermined regions 30.

Accordingly, when a plurality of second optical wireless communication devices 2 are located within one predetermined region 30, communication between the first optical wireless communication device 1 and the plurality of second optical wireless communication devices 2 can be performed by the second communication scheme in which communication is performed sequentially with the plurality of second optical wireless communication devices 2, so that the occurrence of interference can be suppressed. Further, when one second optical wireless communication device 2 is located within a predetermined region 30, communication between the first optical wireless communication device 1 and the second optical wireless communication device 2 can be performed by the first communication scheme in which communication is performed simultaneously, so that a decrease in efficiency of communication between the first optical wireless communication device 1 and the second optical wireless communication device 2 can be suppressed compared to a case where the second communication scheme by sequential communication is implemented in all cases. As a result, when the first optical wireless communication device 1 communicates with a plurality of second optical wireless communication devices 2 located within a plurality of predetermined regions 30, it is possible to use communication by the first communication scheme and communication by the second communication scheme in combination, so that it is possible to suppress a decrease in communication efficiency while suppressing the occurrence of interference between the first optical wireless communication device 1 and the plurality of second optical wireless communication devices 2.

Further, in the present embodiment, as described above, the underwater optical wireless communication method is an underwater optical wireless communication method for performing communication using light between a first optical wireless communication device 1 and each of a plurality of second optical wireless communication devices 2 underwater, the method comprising steps of: acquiring a number of the plurality of second optical wireless communication devices 2 located within each region of a plurality of predetermined regions 30 to which the first optical wireless communication device 1 emits light; and switching a scheme of communication using light emitted from the first optical wireless communication device 1 between a first communication scheme in which communication is performed simultaneously with the plurality of second optical wireless communication devices 2 and a second communication scheme in which communication is performed sequentially with the plurality of second optical wireless communication devices 2, based on whether or not two or more second optical wireless communication devices 2 among the plurality of second optical wireless communication devices 2 are located in each of the plurality of predetermined regions 30.

Accordingly, similarly to the underwater optical wireless communication system 100 described above, it is possible to provide an underwater optical wireless communication method capable of suppressing a decrease in communication efficiency while suppressing the occurrence of interference between the first optical wireless communication device 1 and the plurality of second optical wireless communication devices 2.

Further, in the above embodiment, further effects as described below can be obtained by the configuration as follows.

That is, in the present embodiment, as described above, the first control unit 11 is configured to control the plurality of light emitting and receiving units 10 so as to communicate with the second optical wireless communication device 2 by the first communication scheme when communicating with the second optical wireless communication device 2 within the first region 32 where any one second optical wireless communication device 2 among the plurality of second optical wireless communication devices 2 is located, and is configured to control the plurality of light emitting and receiving units 10 so as to perform communication sequentially with each of the plurality of second optical wireless communication devices 2 by the second communication scheme when communicating with each of the second optical wireless communication devices 2 within the second region 33 where two or more second optical wireless communication devices 2 among the plurality of second optical wireless communication devices 2 are located. Accordingly, the first optical wireless communication device 1 can communicate simultaneously by the first communication scheme with the second optical wireless communication device 2 located within the first region 32 among the plurality of second optical wireless communication devices 2, while sequentially communicating by the second communication scheme with each of the two or more second optical wireless communication devices 2 located within the second region 33 among the plurality of second optical wireless communication devices 2. As a result, when communication is performed by the first optical wireless communication device 1 and each of the plurality of second optical wireless communication devices 2, by using the first communication scheme in the first region 32 and the second communication scheme in the second region 33 in combination, it is possible to easily suppress a decrease in communication efficiency while easily suppressing the occurrence of interference.

Further, in the present embodiment, as described above, the first control unit 11 is configured to emit determination signal light 40 used for determining the number of the plurality of second optical wireless communication devices 2 included in each of the plurality of predetermined regions 30 sequentially from the plurality of first light emitting units 14 to each of the plurality of second optical wireless communication devices 2, and each of the plurality of second optical wireless communication devices 2 is configured to emit response signal light 41 for responding to the first optical wireless communication device 1 when the determination signal light 40 is received. Accordingly, when the response signal light 41 is emitted within a region among the plurality of predetermined regions 30 where the first light emitting unit 14 has emitted the determination signal light 40, it can be determined that the second optical wireless communication device 2 is located within the region where the first light emitting unit 14 has emitted the determination signal light 40. Further, when the response signal light 41 is not emitted within the region among the plurality of predetermined regions 30 where the first light emitting unit 14 has emitted the determination signal light 40, it can be determined that the second optical wireless communication device 2 is not located within the region among the plurality of predetermined regions 30 where the first light emitting unit 14 has emitted the determination signal light 40. As a result, it is possible to easily determine the presence or absence of the second optical wireless communication device 2 and the number of the second optical wireless communication devices 2 within the region where each of the plurality of first light emitting units 14 emits the determination signal light 40.

Further, in the present embodiment, as described above, the first control unit 11 is configured to control the plurality of first light emitting units 14 so as to sequentially emit the determination signal light 40 to each of the plurality of second optical wireless communication devices 2 at predetermined time intervals, and to control the plurality of first light receiving units 15 so as to receive the response signal light 41 from each of the plurality of second optical wireless communication devices 2 at predetermined time intervals. Accordingly, since the response signal light 41 from the region where the determination signal light 40 was emitted is received at predetermined time intervals, even if any second optical wireless communication device 2 among the plurality of second optical wireless communication devices 2 has moved, the region where the second optical wireless communication device 2 after movement is located can be easily acquired. Therefore, even if any second optical wireless communication device 2 among the plurality of second optical wireless communication devices 2 moves, the first control unit 11 can easily switch between the first communication scheme and the second communication scheme according to the position of the second optical wireless communication device 2 after movement. As a result, even if any second optical wireless communication device 2 among the plurality of second optical wireless communication devices 2 moves, it is possible to suppress a decrease in communication efficiency while suppressing the occurrence of interference between the first optical wireless communication device 1 and the plurality of second optical wireless communication devices 2.

Further, in the present embodiment, as described above, each of the plurality of second optical wireless communication devices 2 has the second light emitting unit 20a, the second light receiving unit 20b, the propulsion mechanism 21, and the inspection information acquisition unit 22 that acquires inspection information 50 including at least an image of an inspection object, and is a remote station that transmits the inspection information 50 acquired by the inspection information acquisition unit 22 to the first optical wireless communication device 1 using light emitted from the second light emitting unit 20a while moving around the first optical wireless communication device 1, and the first optical wireless communication device 1 is a base station that acquires the inspection information 50 from each of the plurality of second optical wireless communication devices 2. Accordingly, when transmitting the inspection information 50 acquired by each of the plurality of second optical wireless communication devices 2, which are remote stations, to the first optical wireless communication device 1, which is a base station, it is possible to suppress a decrease in communication efficiency while suppressing the occurrence of interference.

Further, in the present embodiment, as described above, when communicating with the second optical wireless communication device 2 located within the first region 32, the first control unit 11 is configured to control the plurality of light emitting and receiving units 10 so as to perform communication by a space division scheme in which communication is performed simultaneously with the second optical wireless communication devices 2 located in mutually different regions as the first communication scheme, and when communicating with each of the plurality of second optical wireless communication devices 2 located within the second region 33, the first control unit 11 is configured to control the plurality of light emitting and receiving units 10 so as to perform communication by a time division scheme in which communication is performed sequentially with each of the plurality of second optical wireless communication devices 2 located within one region as the second communication scheme. Accordingly, when communication is performed by the space division scheme as the first communication scheme, since the regions for performing communication are mutually different, it is possible to reliably suppress the occurrence of interference even when one first optical wireless communication device 1 and each of the plurality of second optical wireless communication devices 2 communicate simultaneously. Further, since one first optical wireless communication device 1 and each of the plurality of second optical wireless communication devices 2 can communicate simultaneously, communication can be performed efficiently. Further, when communication is performed by the time division scheme as the second communication scheme, communication is performed sequentially with each of the plurality of second optical wireless communication devices 2 located within one region, so that the occurrence of interference can be suppressed. As a result, by switching between the first communication scheme by the space division scheme and the second communication scheme by the time division scheme by the first control unit 11, it is possible to easily suppress a decrease in communication efficiency while easily suppressing the occurrence of interference between the first optical wireless communication device 1 and the plurality of second optical wireless communication devices 2.

### [Modifications]

It should be considered that the embodiment disclosed this time is illustrative in all respects and not restrictive. The scope of the present invention is shown by the claims rather than the description of the above embodiment, and further includes all modifications (variations) within the meaning and scope equivalent to the claims.

For example, in the above embodiment, an example of a configuration in which the first control unit 11 controls the plurality of light emitting and receiving units 10 so as to communicate sequentially with each of the plurality of second optical wireless communication devices 2 located in the second region 33 has been shown, but the present invention is not limited to this. For example, the first control unit may be configured to communicate with the second optical wireless communication device 2 located in the first region 32 by the first scheme and communicate with the plurality of second optical wireless communication devices 2 located in the second region 33 by the second scheme, and may be configured to control the light emitting and receiving unit 10 so as to communicate with the plurality of second optical wireless communication devices 2 simultaneously as long as there is no interference with a plurality of second optical wireless communication devices 2 located in other predetermined regions 30. For example, if configured such that the first optical wireless communication device 1 and each of the plurality of second optical wireless communication devices 2 located in the predetermined region 30 communicate using pairs of light of mutually different wavelength bands, the first control unit may be configured to control the light emitting and receiving unit 10 so as to communicate simultaneously with each of the plurality of second optical wireless communication devices 2 located in the second region 33.

Further, in the above embodiment, an example of a configuration in which the first control unit 11 emits the determination signal light 40 from the first optical wireless communication device 1 to each of the plurality of second optical wireless communication devices 2, and determines the number of second optical wireless communication devices 2 located in each region of the plurality of predetermined regions 30 based on the response signal light 41 from each of the plurality of second optical wireless communication devices 2 has been shown, but the present invention is not limited to this. For example, the first control unit may be configured to determine the number of second optical wireless communication devices 2 located in each region of the plurality of predetermined regions 30 by signal light spontaneously emitted from each of the plurality of second optical wireless communication devices 2. However, in the case of a configuration in which the first control unit determines the number of second optical wireless communication devices 2 located in each region of the plurality of predetermined regions 30 based on light spontaneously emitted from each of the plurality of second optical wireless communication devices 2, the light emitted from the second optical wireless communication devices 2 may interfere. Therefore, it may be difficult to determine the number of second optical wireless communication devices 2 located in each region of the plurality of predetermined regions 30. Therefore, it is preferable that the first control unit 11 is configured to emit the determination signal light 40 from the first optical wireless communication device 1 to each of the plurality of second optical wireless communication devices 2, and to determine the number of second optical wireless communication devices 2 located in each region of the plurality of predetermined regions 30 based on the response signal light 41 from each of the plurality of second optical wireless communication devices 2.

Further, in the above embodiment, an example of a configuration in which the first control unit 11 controls the plurality of first light emitting units 14 so as to sequentially emit the determination signal light 40 to each of the plurality of second optical wireless communication devices 2 at predetermined time intervals has been shown, but the present invention is not limited to this. For example, the first control unit may be configured to control the light emitting and receiving unit 10 so as to emit the determination signal light 40 when communication between the first optical wireless communication device 1 and the second optical wireless communication device 2 is interrupted.

Further, in the above embodiment, an example of a configuration in which the first optical wireless communication device 1 is a base station and each of the second optical wireless communication devices 2 is a remote station has been shown, but the present invention is not limited to this. The relationship between the first optical wireless communication device 1 and the second optical wireless communication device 2 does not have to be that of a base station and a remote station. For example, each of the first optical wireless communication device 1 and the second optical wireless communication device 2 may be a base station to each other.

Further, in the above embodiment, an example of a configuration in which the first control unit 11 performs communication by the space division scheme as the first communication scheme has been shown, but the present invention is not limited to this. For example, the first control unit 11 may be configured to perform communication by a wavelength division scheme in which emitted lights are different from each other as the first communication scheme. In this case, simultaneous communication with a plurality of second optical wireless communication devices 2 corresponding to the number of different wavelength bands can be performed. For example, when the wavelength bands of light emitted from the first light emitting unit 14 are two colors of blue and violet, the wavelength bands of light emitted from the second optical wireless communication device 2 are set to green and light blue. Thereby, even when two second optical wireless communication devices 2 are located within one predetermined region 30, the first optical wireless communication device 1 and the two second optical wireless communication devices 2 can communicate simultaneously.

Further, in the above embodiment, an example of a configuration in which the plurality of light emitting and receiving units 10 are arranged on the same direction side of the first optical wireless communication device 1 has been shown, but the present invention is not limited to this. For example, the plurality of light emitting and receiving units 10 may be arranged in the first optical wireless communication device 1 so as to emit light in mutually different directions. For example, the plurality of light emitting and receiving units 10 may be configured to emit light in mutually different directions by being arranged at predetermined intervals along the outer circumference of the first optical wireless communication device 1.

Further, in the above embodiment, for convenience of explanation, the communication scheme switching processing by the first control unit 11, the processing of acquiring the number of second optical wireless communication devices 2 located within the predetermined region 30, and the communication scheme switching processing for each predetermined region 30 have been described using flow-driven flowcharts in which processing is performed in order along the processing flow, but the present invention is not limited to this. In the present invention, the communication scheme switching processing by the first control unit 11, the processing of acquiring the number of second optical wireless communication devices 2 located within the predetermined region 30, and the communication scheme switching processing for each predetermined region 30 may be performed by event-driven processing in which processing is executed on an event basis. In this case, it may be performed entirely in an event-driven manner, or may be performed by combining event-driven and flow-driven manners.

### [Aspects]

It will be understood by those skilled in the art that the above-described exemplary embodiments are specific examples of the following aspects.

### (Item 1)

An underwater optical wireless communication system comprising: a first optical wireless communication device configured to perform communication using light underwater; and a plurality of second optical wireless communication devices each configured to perform wireless communication using light underwater with the first optical wireless communication device, wherein the first optical wireless communication device includes: a plurality of light emitting and receiving units each having a first light emitting unit and a first light receiving unit, configured to irradiate light to a corresponding region among a plurality of predetermined regions and to receive light from the corresponding region among the plurality of predetermined regions; and a control unit configured to perform control to switch a scheme of communication using light by the plurality of light emitting and receiving units between a first communication scheme in which communication is performed simultaneously with the plurality of second optical wireless communication devices and a second communication scheme in which communication is performed sequentially with the plurality of second optical wireless communication devices, based on whether or not two or more second optical wireless communication devices among the plurality of second optical wireless communication devices are located within each region of the plurality of predetermined regions.

### (Item 2)

The underwater optical wireless communication system according to Item 1, wherein the control unit is configured to control the plurality of light emitting and receiving units so as to communicate with the second optical wireless communication device by the first communication scheme when communicating with the second optical wireless communication device within a first region where any one second optical wireless communication device among the plurality of second optical wireless communication devices is located in the region, and is configured to control the plurality of light emitting and receiving units so as to perform communication sequentially with each of the plurality of second optical wireless communication devices by the second communication scheme when communicating with each of the second optical wireless communication devices within a second region where two or more second optical wireless communication devices among the plurality of second optical wireless communication devices are located in the region.

### (Item 3)

The underwater optical wireless communication system according to Item 1 or 2, wherein the control unit is configured to emit determination signal light used for determining a number of the plurality of second optical wireless communication devices included in each of the plurality of predetermined regions sequentially from the plurality of first light emitting units to each of the plurality of second optical wireless communication devices, and each of the plurality of second optical wireless communication devices is configured to emit response signal light for responding to the first optical wireless communication device when the determination signal light is received.

### (Item 4)

The underwater optical wireless communication system according to Item 3, wherein the control unit is configured to control the plurality of first light emitting units so as to sequentially emit the determination signal light to each of the plurality of second optical wireless communication devices at predetermined time intervals, and to control the plurality of first light receiving units so as to receive the response signal light from each of the plurality of second optical wireless communication devices at predetermined time intervals.

### (Item 5)

The underwater optical wireless communication system according to Item 3 or 4, wherein each of the plurality of second optical wireless communication devices has a second light emitting unit, a second light receiving unit, a propulsion mechanism, and an inspection information acquisition unit that acquires inspection information including at least an image of an inspection object, and is a remote station that transmits the inspection information acquired by the inspection information acquisition unit to the first optical wireless communication device using light emitted from the second light emitting unit while moving around the first optical wireless communication device, and the first optical wireless communication device is a base station that acquires the inspection information from each of the plurality of second optical wireless communication devices.

### (Item 6)

The underwater optical wireless communication system according to Item 2, wherein the control unit is configured to control the plurality of light emitting and receiving units so as to perform communication by a space division scheme in which communication is performed simultaneously with the second optical wireless communication devices located in mutually different regions as the first communication scheme when communicating with the second optical wireless communication device located within the first region, and is configured to control the plurality of light emitting and receiving units so as to perform communication by a time division scheme in which communication is performed sequentially with each of the plurality of second optical wireless communication devices located within one region as the second communication scheme when communicating with each of the plurality of second optical wireless communication devices located within the second region.

### (Item 7)

An underwater optical wireless communication method for performing communication using light between a first optical wireless communication device and each of a plurality of second optical wireless communication devices underwater, the method comprising steps of: acquiring a number of the plurality of second optical wireless communication devices located within each region of a plurality of predetermined regions to which the first optical wireless communication device emits light; and switching a scheme of communication using light emitted from the first optical wireless communication device between a first communication scheme in which communication is performed simultaneously with the plurality of second optical wireless communication devices and a second communication scheme in which communication is performed sequentially with the plurality of second optical wireless communication devices, based on whether or not two or more second optical wireless communication devices among the plurality of second optical wireless communication devices are located in each of the plurality of predetermined regions.

### [Description of Reference Signs]

1 First optical wireless communication device
2, 2a, 2b, 2c Plurality of second optical wireless communication devices
10 Light emitting and receiving unit (plurality of light emitting and receiving units)
11 First control unit (control unit)
14 First light emitting unit
15 First light receiving unit
20a Second light emitting unit
20b Second light receiving unit
21 Propulsion mechanism
22 Inspection information acquisition unit
30 Predetermined region (plurality of predetermined regions)
40, 40a, 40b, 40c Determination signal light
41, 41a, 41b, 41c Response signal light
50 Inspection information
100 Underwater optical wireless communication system

## Claims

1. An underwater optical wireless communication system comprising: a first optical wireless communication device configured to perform communication using light underwater; and a plurality of second optical wireless communication devices each configured to perform wireless communication using light underwater with the first optical wireless communication device, wherein the first optical wireless communication device includes: a plurality of light emitting and receiving units each having a first light emitting unit and a first light receiving unit, configured to irradiate light to a corresponding region among a plurality of predetermined regions and to receive light from the corresponding region among the plurality of predetermined regions; and a control unit configured to perform control to switch a scheme of communication using light by the plurality of light emitting and receiving units between a first communication scheme in which communication is performed simultaneously with the plurality of second optical wireless communication devices and a second communication scheme in which communication is performed sequentially with the plurality of second optical wireless communication devices, based on whether or not two or more second optical wireless communication devices among the plurality of second optical wireless communication devices are located within each region of the plurality of predetermined regions.

2. The underwater optical wireless communication system according to Claim 1, wherein the control unit is configured to control the plurality of light emitting and receiving units so as to communicate with the second optical wireless communication device by the first communication scheme when communicating with the second optical wireless communication device within a first region where any one second optical wireless communication device among the plurality of second optical wireless communication devices is located in the region, and is configured to control the plurality of light emitting and receiving units so as to perform communication sequentially with each of the plurality of second optical wireless communication devices by the second communication scheme when communicating with each of the second optical wireless communication devices within a second region where two or more second optical wireless communication devices among the plurality of second optical wireless communication devices are located in the region.

3. The underwater optical wireless communication system according to Claim 1, wherein the control unit is configured to emit determination signal light used for determining a number of the plurality of second optical wireless communication devices included in each of the plurality of predetermined regions sequentially from the plurality of first light emitting units to each of the plurality of second optical wireless communication devices, and each of the plurality of second optical wireless communication devices is configured to emit response signal light for responding to the first optical wireless communication device when the determination signal light is received.

4. The underwater optical wireless communication system according to Claim 3, wherein the control unit is configured to control the plurality of first light emitting units so as to sequentially emit the determination signal light to each of the plurality of second optical wireless communication devices at predetermined time intervals, and to control the plurality of first light receiving units so as to receive the response signal light from each of the plurality of second optical wireless communication devices at predetermined time intervals.

5. The underwater optical wireless communication system according to Claim 3, wherein each of the plurality of second optical wireless communication devices has a second light emitting unit, a second light receiving unit, a propulsion mechanism, and an inspection information acquisition unit that acquires inspection information including at least an image of an inspection object, and is a remote station that transmits the inspection information acquired by the inspection information acquisition unit to the first optical wireless communication device using light emitted from the second light emitting unit while moving around the first optical wireless communication device, and the first optical wireless communication device is a base station that acquires the inspection information from each of the plurality of second optical wireless communication devices.

6. The underwater optical wireless communication system according to Claim 2, wherein the control unit is configured to control the plurality of light emitting and receiving units so as to perform communication by a space division scheme in which communication is performed simultaneously with the second optical wireless communication devices located in mutually different regions as the first communication scheme when communicating with the second optical wireless communication device located within the first region, and is configured to control the plurality of light emitting and receiving units so as to perform communication by a time division scheme in which communication is performed sequentially with each of the plurality of second optical wireless communication devices located within one region as the second communication scheme when communicating with each of the plurality of second optical wireless communication devices located within the second region.

7. An underwater optical wireless communication method for performing communication using light between a first optical wireless communication device and each of a plurality of second optical wireless communication devices underwater, the method comprising steps of: acquiring a number of the plurality of second optical wireless communication devices located within each region of a plurality of predetermined regions to which the first optical wireless communication device emits light; and switching a scheme of communication using light emitted from the first optical wireless communication device between a first communication scheme in which communication is performed simultaneously with the plurality of second optical wireless communication devices and a second communication scheme in which communication is performed sequentially with the plurality of second optical wireless communication devices, based on whether or not two or more second optical wireless communication devices among the plurality of second optical wireless communication devices are located in each of the plurality of predetermined regions.
